Europäisches Patentamt

European Patent Office

Office européen des brevets

(11) Publication number: **0 143 140**
A1

# EUROPEAN PATENT APPLICATION

(21) Application number: 83830234.7

(22) Date of filing: 23.11.83

(51) Int. Cl.⁴: **B 62 M 3/00**, B 62 M 1/02

(43) Date of publication of application: 05.06.85
Bulletin 85/23

(71) Applicant: **Battistutta, Antonio, Via Julia 9/B,
I-33050 Sevegliano di Bagnaria Arsa Udine (IT)**

(72) Inventor: **Battistutta, Antonio, Via Julia 9/B,
I-33050 Sevegliano di Bagnaria Arsa Udine (IT)**

(84) Designated Contracting States: **AT BE CH DE FR GB LI
LU NL SE**

(74) Representative: **D'Agostini, Giovanni, Dr., n. 17 via
G.Giusti, I-33100 Udine (IT)**

(54) **Pedal crank central motion device for bicycles.**

(57) A pedal crank central motion device for bicycles where-in each pedal crank (A, B) comprises a plurality of levers (1, 2, 3, 4, 5, 6, 7, 8) keyed free coaxially rotatable to the central transmission axis (0–0) together with the pedal crank lever (1), one interconnected with the other for receiving and retransmitting the torque applied to the pedal crank (A, B) to the final transmission lever (8) normally placed at the opposite side of the pedal crank lever (1) and keyed to the end of a conventional central transmission shaft (C) by means of a respective free rotatable connecting bush (8') placed inside the end (1'') of said pedal crank lever (1).

EP 0 143 140 A1

## Pedal crank central motion device for bicycles

The present invention relates to an improved pedal central motion device with crown gear transmission for bicycles.

The invention is particularly suitable for improving the efficiency of the transmission of the pedal crank central motion unit and relative crown gear of bicycles.

In the present state of the art a transmission system to the central pin utilizes a single transmission arm called "pedal crank" which keys directly, by bearing means, to the central shaft connected with the crown gear for engaging the chain which transmits motion to the back free wheel.

The main drawback resulting from this transmission system is the considerable "stiffness" of the linkage which does not allow recovery and reversal of pickup forces and consequently involves a necessary oversizing of the central transmission shaft and connected pedal crank. A further drawback results from the substantial unidirectional friction force transmitted to the

- 2 -

0143140

central transmission shaft at the maximum pickup moment, that is when the pedal crank is horizontally forward oriented.

The square hole pedal crank keying systems to the relative central connecting shaft in bicycles are well known, which are provided with square clutching key to the respective opposite ends in which, especially in racing bicycles subjected to considerable stress, the pedal crank keying strips due to the excessive bending stress thereon which involves a deflection-torsion reaction on the keying resulting in said stripping. Attempts to avoid this disadvantage have been unsuccessfull, because the metal characteristics of the pedal crank or the respective section should be improved with consequent weight increase and therefore total efficiency decrease of the bicycle, which must be, as it is well known, as light as possible. In fact, pedal cranks used at present are made of ultralight alloy and for increasing the material strength, alloy steel (as for the connecting shaft) should be used which is much heavier and thus not convenient; in the same way, a thickening of the keying knot would be unsuccessfull, becoming excessively projecting and increasing any way the bicycle weight.

The invention as claimed is intended to remedy these drawbacks improving the transmission efficiency. It solves the problem by carrying out a plurality of levers keyed coaxially on the central transmission axis together with the pedal crank, one interconnected with the other for receiving and retransmitting the torque applied to the pedal crank to the final transmission lever normally placed at the opposite side of the pedal crank and keyed, on the central transmission axis, to the end of said central trasmission shaft by means of a free rotatable connecting bush placed inside the end of said pedal crank.

An important feature of the central device, comprises the keying of the crown gear on said axially displaceable connecting bush.

The advantages offered by the invention are mainly that a transmission of considerable elastic effect is determined which can absorbe the greater forces applied in the transmission optimum condition (horizontal pedal crank forward oriented) and gradually and progressively transmits them in the immediately successive moments, with the further advantage of absorbing most of the frictions which otherwise would develop for the strong initial action of unidirectional forces on the respective support of the central transmission shaft.

Further, the axially displaceable crown gear allows the self-aligning with the opposed free-wheel by means of the respective connecting chain.

The invention is described in detail below, by way of example only, with reference to drawings which illustrate some preferred embodiments, in which:-

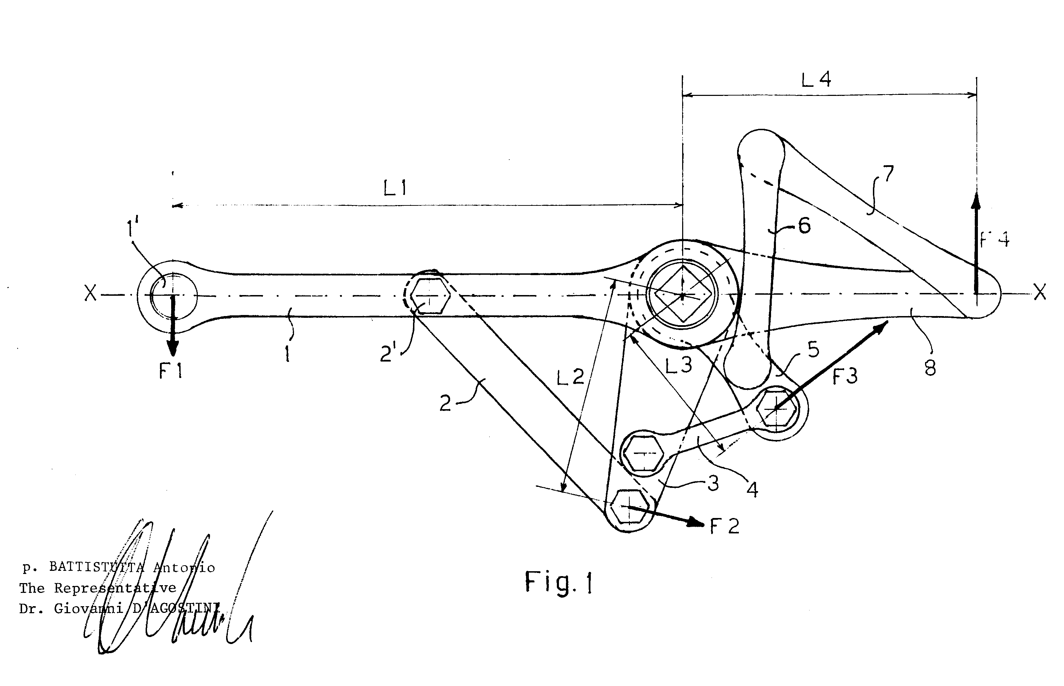

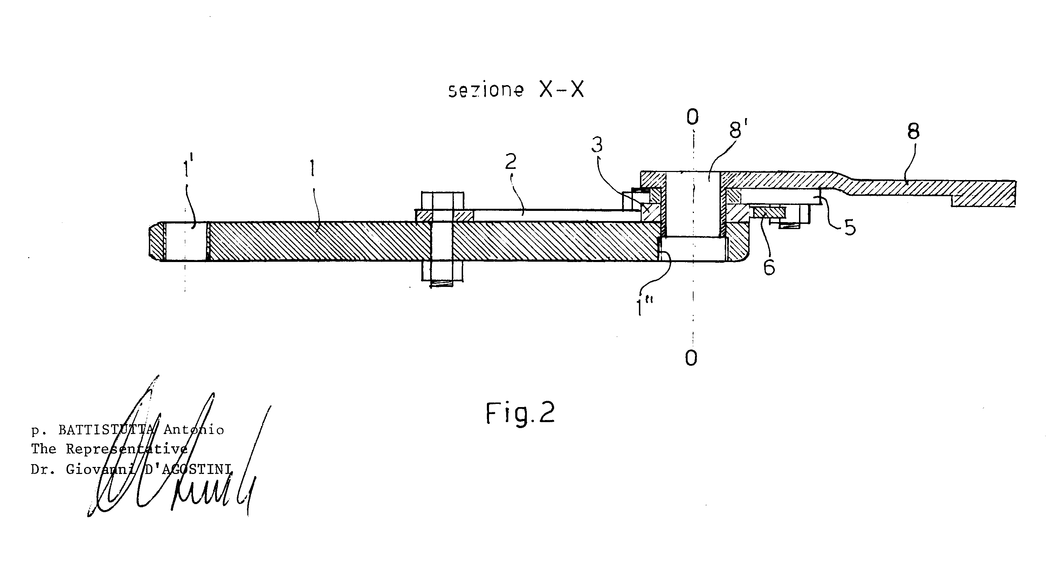

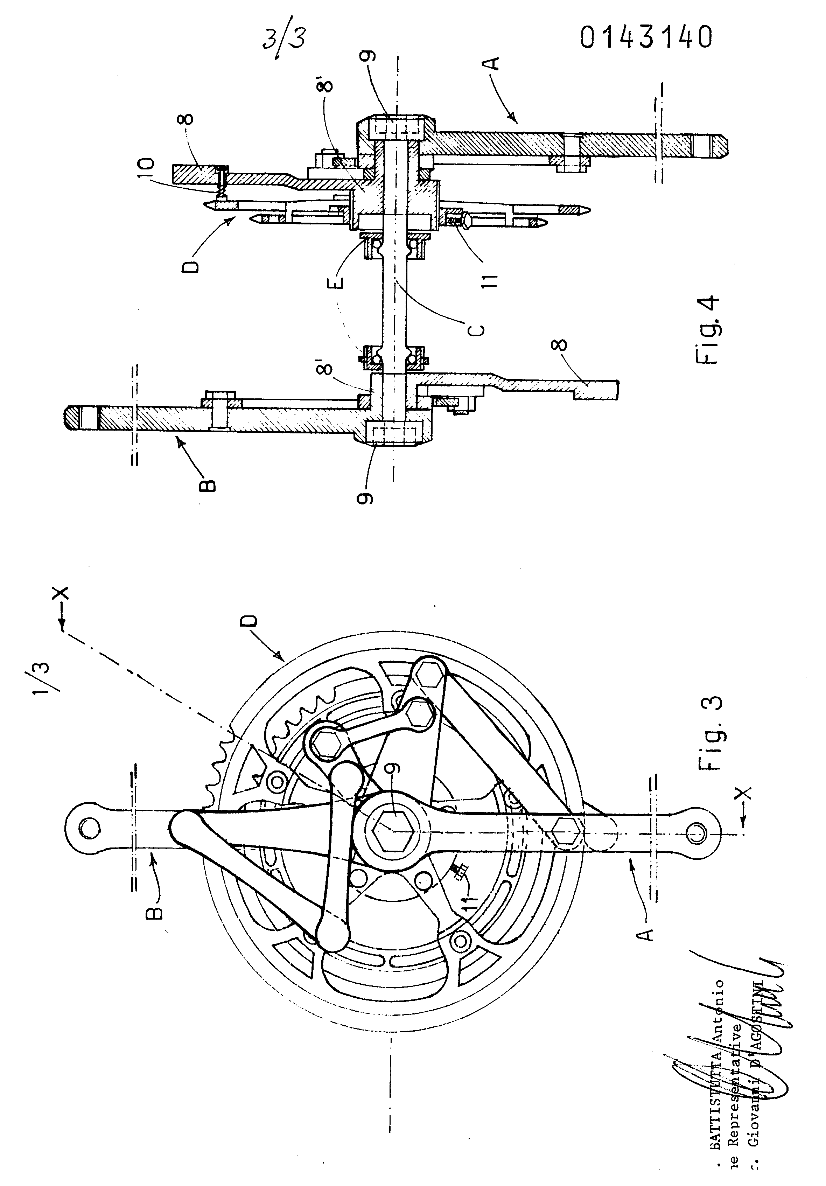

Figure 1 is a schematic front elevation view, on the normal plane to the axis of the central transmission shaft, of the pedal crank unit carried out in accordance with the improvement of the present invention, in the specific case with the pedal crank horizontally forward oriented for receiving the maximum motion transmission stress; Figure 2 is a transversal sectional top view on the plane X-X of the pedal crank unit shown in Figure 1; Figure 3 is a normal view with respect to the central rotation axis taken from the side of the crown gear of the central motion device with relative pedal cranks, without visualization of the bicycle frame support; Figure 4 is an axial partial sectional view on the plane X-X of the central motion device in Figure 3 not mounted on the bicycle frame.

Figures 1 and 2 show the pedal crank unit comprising:

- a proper pedal crank 1 provided with a threaded free end hole 1' for screwing the pedal and with a free hole passing at the opposite side 1" through the central pin transmission axis 0-0, being the pedal crank of a conventional standard free length L1 and free to rotate in neutral transmission with respect to said central transmission pin passing through the respective central unit axis 0-0;

- a first transmission arm 2 pivoted in an intermediate point 2' of the free length L1 of the pedal crank 1;

- a first transmission lever arm 3, of a free length L2 shorter than the free length L1 of the pedal crank arm, also rotatively free, pivoted on said axis 0-0 of the central motion transmission pin and pivoted at the free end with the respective free end of said first transmission arm 2 of the pedal crank 1;

- a second transmission arm 4 pivoted in an intermediate point of the free length L2 of said first transmission lever arm 3;

- a second transmission lever arm 5, of a free length L3 shorter than the length L2 of said first transmission lever arm 3, also rotatively free, pivoted on said axis 0-0 of the central motion transmission pin and pivoted at the free end with the respective free end of the second transmission arm 4 of said first transmission lever arm 3;

- a third transmission arm 6 elastically fixed in an intermediate point of the free length L3 of said second transmission lever arm 5, which extends by means of an intermediate arm 7 and connects at the free end of:

- a third transmission lever arm 8 of a length L4 larger than the length L3 of said second transmission lever arm 5 and pivots on the central axis 0-0 to the respective central motion transmission pin by means of a keying system 8' which supports coaxially and rotatively free said first transmission lever arm 3 and second transmission lever arm 5 and said pedal crank 1.

More in detail, the third transmission arm 6 together with the respective intermediate arm 7 connect in a triangular way at the free end of the third transmission lever arm 8, which is placed exactly at the opposite side of the pedal crank 1.

In accordance with the invention, the pedal crank 1, being rotatively free, transmits the torque F1xL1 rotating on the axis 0-0 to said first transmission lever arm 3 which practically retransmits (friction excluded) the same torque F2xL2 to said second transmission lever arm 5, which in its turn practically retransmits (imputable friction excluded) the same torque F3xL3 to said third transmission lever arm 8 (but more elastically by means of the triangulation 6,7), which in its turn practically retransmits (imputable friction excluded) the same torque F4xL4 to the central transmission axis by means of the respective keying key 8', but with a force F4 from the bottom upward and opposed to the original force F1, usually smaller and farther, the result being a lightening of the friction stresses which are redistributed in a more or less uniform way around the central axis 0-0, whilst the original force F1 is litterally elastically absorbed by the above described articulation in a spiral way at the pickup for being then immediately returned.

With such a system the considerable advantage is therefore obtained of better transmitting the torque F1xL1 through the

- 6 -

0143140

intermediation of a set of neutral levers 1,3,5 before passing to the proper keying lever for the definitive transmission of the traction torque of the vehicle 8, which lever will then be oriented from the bottom upwards F4 instead of down from above F1 as it is normal in the conventional transmission system with single pedal crank 1.

In one preferred embodiment of the invention the central device comprises two equal and opposite pedal cranks A,B, as previously described, one having a lengthenable connecting bush protruding around a central shaft C and comprising a peripheral toothed keying in order to key, free axially movable, a conventional crown gear D.

The central transmission axis C is a conventional central transmission axis with shaped keying ends further axially comprising a threaded hole for clamping by a screw 9 the connecting bush 8' of the pedal cranks A,B. Obviously, the central shaft C is mounted on the support frame of the bicycle, by means of bearings E.

Conveniently the crown gear D includes a setscrew 11, to stop, for special purposes, its free axial movement.

One of said pedal cranks is provided with an elastically lengthenable spring 10 oriented to abut against the periphery of said crown gear to avoid the disengaged transmission chain being inserted between the crown gear and the respective pedal crank.

Udine, 15.11.1983

f. Antonio BATTISTUTTA

The Representative

Dr. Giovanni D'AGOSTINI

Claims:

1. Pedal crank central motion device for bicycles, characterised in that each pedal crank (A,B) comprises a plurality of levers (1,2,3,4,5,6,7,8) keyed free coaxially rotatable on the central transmission axis (O-O) together with the pedal crank lever (1), one interconnected with the other for receiving and retransmitting the torque applied to the pedal crank (A,B) to the final transmission lever (8) normally placed at the opposite side of the pedal crank lever (1) and keyed to the end of a conventional central trasmission shaft (C) by means of a respective free rotatable connecting bush (8') placed inside the end (1") of said pedal crank lever (1).

2. A central motion device comprising pedal cranks (A,B) as claimed in claim 1, characterised in that it comprises the keying of the crown gear (D) on said axially displaceable connecting bush (8').

3. A central motion device as claimed in the preceding claims, characterised in that the crown gear (D) includes a setscrew (11), to stop, for special purposes, its free axial movement.

4. A central motion device as claimed in the preceding claims, characterised in that one of said pedal cranks is provided with an elastically lengthenable pin (10) oriented to abut against the periphery of said crown gear (D) to avoid the disengaged transmission chain being inserted between the crown gear and the respective pedal crank.

5. A pedal crank as claimed in claim 1, characterised in that it comprises a plurality of levers (3,5) coaxially neutral keyed on the central pin (0-0) together with said pedal crank (1), one interconnected with the other (2,4,6,7) for receiving and retransmitting the torque applied to the pedal crank lever (1) to a final transmission lever (8), usually located at the opposite side of the pedal crank lever (1).

6. A pedal crank as claimed in the preceding claim, characterised in that it comprises:

- a pedal crank lever (1) provided with a free end threaded hole (1') for screwing the pedal and with a free hole passing at the opposite side (1") through the transmission axis (0-0) of the central transmission shaft (C), being the pedal crank lever of a free standard conventional length (L1) and free to rotate in neutral transmission with respect to said central transmission pin passing through the respective central unit axis (0-0);

a first transmission lever (2) pivoted in an intermediate point (2') of the pedal crank (1) free length (L1);

- a first transmission lever arm (3), of a free length (L2) shorter than the free length (L1) of the pedal crank arm, also rotatively free, pivoted on said central motion transmission pin axis (0-0) and pivoted at the free end in the respective free end of said first transmission arm (2) of the pedal crank (1);

- a second transmission arm (4) pivoted in an intermediate point of the free length (L2) of said first transmission lever arm (3);

- a second transmission lever arm (5), of a length (L3) shorter than the length (L2) of said first transmission lever arm (3), also rotatively free, pivoted on said central motion transmission pin axis (0-0) and pivoted at the free end in the respective free end of the second transmission arm (4) of said first transmission lever arm (3);

- 3 -    0143140

- a third transmission arm (6) elastically fixed in an intermediate point of the free length (L3) of said second transmission lever
arm (5), which extends by means of an intermediate arm (7) and
connects at the free end of:

- a third transmission lever arm (8) of a length (L4) larger than
the length (L3) of said second transmission lever arm (5) pivots
on the central axis (0-0) in the respective central motion
transmission pin by means of a keying system (8') which supports
coaxially and rotatively free said first (3) and second (5) lever
arms and said pedal crank (1).

7. A pedal crank as claimed in the preceding claim, characterised
in that the third transmission arm (6) together with the respective intermediate arm (7) connect in triangular way at the free end
of the third transmission lever arm (8), being the first one
passing practically tangent the nearest possible to the central
pin axis (0-0).

Udine, 15.11.1983.

f. Antonio BATTISTUTTA
The Representative
Dr. Giovanni D'AGOSTINI

Fig.1

0143140

sezione X-X

Fig.2

p. BATTISTUTTA Antonio
The Representative
Dr. Giovanni D'AGOSTINI

2/3

0143140

X

B

D

9

11

A

X

Fig. 3

B

D

10

8

8'

9

E

C

8'

11

9

A

8

Fig. 4

0143140

European Patent
Office

**EUROPEAN SEARCH REPORT**

0143140

Application number

EP 83 83 0234

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | DE-A-2 605 718 (SCHERLITZKE)<br>* Figures 1-4,6; page 5, line 11 - page 6, line 9 *<br><br>----- | 1 | B 62 M 3/00<br>B 62 M 1/02 |
| | | | **TECHNICAL FIELDS SEARCHED (Int. Cl. 3)**<br><br>B 62 M |

The present search report has been drawn up for all claims

| Place of search | Date of completion of the search | Examiner |
|---|---|---|
| THE HAGUE | 18-07-1984 | DUBOIS B.F.J. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82